# EUROPEAN PATENT APPLICATION

(11) **EP 4 606 197 A1**
(43) Date of publication of application: **27.08.2025**
(21) Application number: 25155963.9
(22) Date of filing: 05.02.2025
(51) Int. Cl.: A01B 69/00, B62D 13/00

(54) **A VEHICLE WITH AN OPERATOR CONTROL PROVIDING HAPTIC FEEDBACK FOR INDICATING A POTENTIAL COLLISION**

(30) Priority: 23.02.2024 GB 202402607
(71) Applicant: AGCO International GmbH, 8212 Neuhausen am Rheinfall (CH)
(72) Inventor: BARZEN, Alexander, 76275 Ettlingen (DE)
(74) Representative: AGCO Intellectual Property Department

(57) **Abstract**

A vehicle (8) has an operator control (10) configured to provide a force (F) as haptic feedback, a coupling (4) configured for hitching a towable implement (5), a sensor arrangement (14) configured to determine at least one sensor value and a control unit (9) configured to anticipate a potential collision between the vehicle (8) and the towable implement (5) based on the at least one sensor value and to increase the force (F) if a potential collision is anticipated.

## Description

### FIELD

The present disclosure relates generally to a vehicle with an operator control providing haptic feedback.

### BACKGROUND

Vehicles are equipped with an operator control such as a steering wheel or a joystick to manually control vehicle dynamics, e. g. to steer the vehicle or to adjust the speed of the vehicle. Some kind of operator controls may provide a haptic feedback, as for example a vibration function, to indicate specific events during a driving situation, such as driving out of a traffic lane. Hence, the haptic feedback can be used to warn the driver of the vehicle or to catch the attention of the driver next to other acoustic or optical indicators.

U. S. patent application 2017/0136839 A1, "Device and method for detecting a pivot angle between a vehicle and a trailer device", published on May 18, 2017, discloses a pivot angle detection device comprising two or more transmitters attached to a vehicle for determining a pivot angle between the vehicle and a trailer coupled to the vehicle.

### BRIEF SUMMARY

It is an objective to provide a vehicle with an operator control for assisting the operator of the vehicle to avoid a collision between the vehicle and a towable implement when coupled to the vehicle.

According to an aspect of the invention, there is provided a vehicle comprising an operator control configured to provide a force as haptic feedback, a coupling configured for hitching a towable implement, a sensor arrangement configured to determine at least one sensor value and a control unit configured to anticipate a potential collision between the vehicle and the towable implement based on the at least one sensor value and to increase the force if a potential collision may be anticipated.

The vehicle may be of any type such as an agricultural vehicle, for example a tractor, a harvester, a combine, etc. In contrast to an implement carried and fully lifted up by the vehicle, the towable implement may have a wheel for having contact with and rolling on a ground. The towable implement may be detachably connectable with the coupling of the vehicle, for example by means of a drawbar. The towable implement by be a trailer or any other implement to be pulled over an agricultural field such as a plough. The operator may control the operator control to change a steering angle of the vehicle. The steering angle may be neutral or zero when the vehicle is driving in a straight direction and may be increased to steer the vehicle for driving a curve. The more the steering angle will be increased by the operator, the smaller the radius of the curve will be. When the vehicle drives a curve, the vehicle may deflect in respect of the towable implement. The degree of the deflection may be expressed or measured by a hitching angle between the vehicle and the towable implement, for example between the coupling of the vehicle and the drawbar of the towable implement. The direction into which the vehicle deflects in respect of the towable implement is defined here as pivoting direction. The smaller the radius of the curve is, the greater may be the hitching angle between the vehicle and the towable implement and the smaller may be a distance between the vehicle and the towable implement. I. e., if the operator steers the vehicle too much so that the vehicle drives a curve with a radius being too small, the distance between the vehicle and the towable implement may get too small so that the towable implement may collide with the vehicle.

The distance and/or the change of the distance may be detected by the sensor arrangement directly or indirectly, e. g. by determining the hitching angle and/or a change of the hitching angle. Based on the sensor values provided by the sensor arrangement, the control unit may anticipate whether a collision between the vehicle and the towable implement is impending. If so, the control unit may cause a haptic feedback of the operator control. The haptic feedback may be a vibrating feedback or a static feedback such as a counter force impeding an operation of the operator control. For instance, the vibrating haptic feedback may warn the operator of the vehicle. It is also possible, that the control unit may increase the force of the haptic feedback so that the operator of the vehicle is prevented to steer the vehicle too much in a curve having a radius being too small for avoiding a collision between the vehicle and the towable implement. The force of the haptic feedback may be ramped up until a manual operation of the operator control for increasing the steering angle is blocked. A manual operation of the operator control for increasing the steering angle may be blocked before the vehicle collides with the towable implement.

The control unit may be configured to decrease the force if no potential collision is anticipated.

A potential collision may be denied by the control unit if the distance between the vehicle and the towable implement increases. For example, the force of haptic feedback may be reduced if the operator control is operated to reduce the steering angle of the vehicle to steer the vehicle from a curve back to a straight direction. Then, the distance between the vehicle and the towable implement will increase and the hitching angle will be reduced.

The at least one sensor value may comprise a value indicative of a distance between the vehicle and a hitched towable implement.

For example, the sensor arrangement may comprise a sensor configured to determine the hitching angle between the vehicle and the towable implement. The sensor may be a camera, e. g. for capturing an angle between the vehicle and a drawbar of the towable implement. Alternatively, the sensor may be a distance sensor such as an ultrasonic sensor or a radar sensor. Hence, different types of sensors may be used to provide a sensor value representing the distance between the vehicle and the towable implement.

The control unit may be configured to determine a distance threshold value and to anticipate a potential collision if the value indicative of the distance violates the distance threshold value.

The distance threshold value may depend on the dimensions of the towable implement. For example, when a vehicle with a towable implement is driving a curve of a specific radius, the distance between the vehicle and the towable implement is greater in case of a towable implement with a longer drawbar in contrast to a towable implement with a shorter drawbar. Hence, the control unit may be configured to determine a distance threshold value based on the drawbar of the towable implement. The distance threshold value may depend on the length of the drawbar and may be less restrictive in case of a longer drawbar and more restrictive in case of a shorter drawbar. The distance threshold value may be defined that a collision between the vehicle and the towable implement can be prevented. The distance threshold value may be violated if the distance determined by the sensor arrangement falls below a corresponding threshold value. The distance threshold value may be determined automatically by the control unit or may be set by the operator of the vehicle.

The value indicative of the distance between the vehicle and a hitched towable implement may be a hitching angle between the vehicle and the hitched towable implement.

Since the hitching angle corresponds to a distance between the vehicle and the towable implement, the control unit 9 may convert the hitching angle into a corresponding distance value. Then, the control unit 9 may compare the value with the distance threshold value. The distance threshold value may be violated if the distance value determined by the control unit is smaller than the distance threshold value.

The at least one sensor value may comprise a value indicative of a steering angle.

The sensor arrangement may comprise a sensor configured for determining the steering angle of the vehicle. When the steering angle is zero, the vehicle will drive in a straight direction. The more the steering angle will be increased the smaller will be the radius of the curve the vehicle will drive. If the steering angle is too great the radius of the curve will be too small and the vehicle may collide with the towable implement. Hence, the steering angle can be an indicator for anticipating a potential collision between the vehicle and the towable implement.

The control unit may be configured to determine a pivoting direction of the vehicle in respect of the towable implement and to determine a steering direction of the steering angle.

The pivoting direction of the vehicle in respect of the towable implement corresponds with the direction to which the hitching angle increases from a neutral position defining a straight alignment of the vehicle and the towable implement. In forward driving direction, the pivoting direction will be the left direction when the vehicle is driving a left turn (wherein the hitching angle increases in a left direction accordingly) and the pivoting direction will be the right direction when the vehicle is driving a right turn (wherein the hitching angle increases in a right direction accordingly). Thus, the pivoting direction may be determined based on the increasing direction of the hitching angle. Moreover, the pivoting direction may be determined based on a distance sensor checking whether the distance between the vehicle and the towable implement decreases at a left corner or a right corner of the vehicle.

The at least one sensor value comprises a value indicative of a driving direction of the vehicle.

The driving direction may be forward or rearward. The sensor arrangement may comprise a sensor configured for determining the driving direction. The driving direction may be calculated based on a speed sensor of the vehicle. Moreover, the driving direction may be determined based on a GNSS signal received from a GNSS such as GPS or Galileo.

The control unit may be configured to determine a distance threshold value, to determine a steering threshold angle in relation to the distance threshold value, to determine whether the value indicative of the steering angle violates the steering threshold angle and to anticipate a potential collision if the steering angle violates the steering threshold angle, if the pivoting direction and the steering direction have the same direction and if driving direction is forward.

Depending on the steering angle of the vehicle, a corresponding distance between the vehicle and the towable implement will arise. Due to this correlation, the control unit may determine a steering threshold angle wherein the distance between the vehicle and the towable implement will meet the distance threshold value if the steering angle meets the steering threshold angle. The steering threshold angle will be violated if the steering angle exceeds the steering threshold angle so that the distance between the vehicle and the towable implement may violate the distance threshold value. The steering threshold angle may be violated in a left steering direction as well as in a right steering direction. Similar to the distance threshold value, the steering threshold angle may depend on the dimensions of the towable implement, as for example the length of the drawbar, and may be considered accordingly. The steering threshold angle may be less restrictive in case of a longer drawbar and more restrictive in case of a shorter drawbar. The steering threshold angle may be defined that a collision between the vehicle and the towable implement can be prevented. The steering threshold angle may be determined automatically by the control unit or may be set by the operator of the vehicle.

Both, the pivoting direction of the vehicle in respect of the towable implement and the steering direction may be directed in the same direction, for example the left direction or the right direction.

Based on the sensor values provided by the sensor arrangement, the control unit may determine whether each of the conditions is fulfilled, here the condition of a violation of the steering threshold angle, the condition of conformity of the directions of the pivoting direction and the steering direction, and the condition of the driving direction. If all three conditions are fulfilled, the hitching angle may be increased and thus the distance between the vehicle and the towable implement may be reduced accordingly. Hence, the control unit may take all three conditions under consideration for anticipating a potential collision since the consideration of only one or two of these conditions may not be sufficient under some circumstances.

The control unit may be configured to anticipate no potential collision if the pivoting direction and the steering direction have different directions and if the driving direction is forward.

In case of these conditions, the hitching angle may be reduced and thus the distance between the vehicle and the towable implement may be increased accordingly. In addition, it is worth to be mentioned for this situation that a validation of two conditions only may be sufficient that the control unit may deny a potential collision.

The control unit may be configured to anticipate no potential collision if the pivoting direction and the steering direction have the same direction and if the driving direction is rearward.

Also in case of these conditions, the hitching angle may be reduced and thus the distance between the vehicle and the towable implement may be increased accordingly. In addition, it is worth to be mentioned for this situation that a validation of two conditions only may be sufficient that the control unit may deny a potential collision.

The control unit may be configured to anticipate a potential collision if the steering angle violates the steering threshold angle if the pivoting direction and the steering direction have different directions and if the driving direction is rearward.

If all three conditions are fulfilled, the hitching angle may be increased and thus the distance between the vehicle and the towable implement may be reduced accordingly. Hence, the control unit may take all three conditions under consideration for anticipating a potential collision since the consideration of only one or two of these conditions may not be sufficient under some circumstances.

The control unit may be configured to increase the force if a potential collision is anticipated and if the operator control is operated in a direction that the steering angle violates or will violate the steering threshold angle.

The operator control may be operable in a first direction for increasing the steering angle and a second direction for decreasing the steering angle. Hence, the operator can control the driving direction by changing the steering angle of the vehicle to drive the vehicle in a direction to increase or decrease the distance between the vehicle and the towable implement. Consequently, the control unit may increase the force for the haptic feedback to provide a resistance against an operation of the operator control that may decrease the distance between the vehicle and the towable implement. The force may increase the more, the more the distance will be reduced. The control unit may increase the force such that a manual operation of the operator control is blocked to prevent a steering angle that may cause a collision between the vehicle and the towable implement. In contrast, the control unit may reduce the force for the haptic feedback if the operator control is operated in a direction that increases the distance between the vehicle and the towable implement. In such a situation, the control unit may optionally remove the force for the haptic feedback completely so that the operator feels no resistance against an operation of the operator control.

The control unit may be configured to decrease the force if a potential collision is anticipated and if the operator control is operated in a direction to reduce the steering angle below the steering threshold angle.

Hence, the resistance against an operation of the operator control may be reduced or removed by the control unit to indicate to the operator that he is operating the operator control in a direction to increase the distance between the vehicle and the towable implement.

Another aspect includes a method of providing a force as haptic feedback for an operator control of a vehicle connectable with a towable implement. The method comprises steps for determining at least one sensor value, anticipating a potential collision between the vehicle and the towable implement based on the at least one sensor value, and increasing the force if a potential collision is anticipated.

As disclosed above, the control unit is configured to execute different actions. Each method step of the method may correspond to an action that may be executable by the control unit. The method may comprise one or more additional method steps wherein each method step may analogously correspond to an action disclosed above. Hence, each action for which the control unit is configured to execute may be defined as a method step.

Finally, the operator control as disclosed above enables an intuitive operation of the vehicle for avoiding a collision between the vehicle and the towable implement. The operator may rely on the haptic feedback provided by the operator control only without the need for any other acoustic or optical indicators or warning devices to indicate a potential collision.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates a vehicle with an operator control and a sensor arrangement.
FIG. 2 illustrates a simplified block diagram of the vehicle of FIG. 1.
FIG. 3 illustrates schematically an example of an operator control.
FIG. 4 illustrates the vehicle of FIG. 1 with a towable implement.
FIG. 5A illustrates the vehicle of FIG. 1 with a towable implement having a shorter drawbar.
FIG. 5B illustrates the vehicle of FIG. 1 with a towable implement having a longer drawbar.
FIG. 6 illustrates a simplified view of a control unit of the vehicle shown in FIG. 1.
FIG. 7A illustrates the vehicle of FIG. 1 with a towable implement wherein a steering direction and a pivoting direction are directed in the same direction.
FIG. 7B illustrates the vehicle of FIG. 1 with a towable implement wherein the steering direction and the pivoting direction are directed in different directions.
FIG. 8 illustrates a flow chart of a method executable by the control unit of FIG. 6.

### DETAILED DESCRIPTION

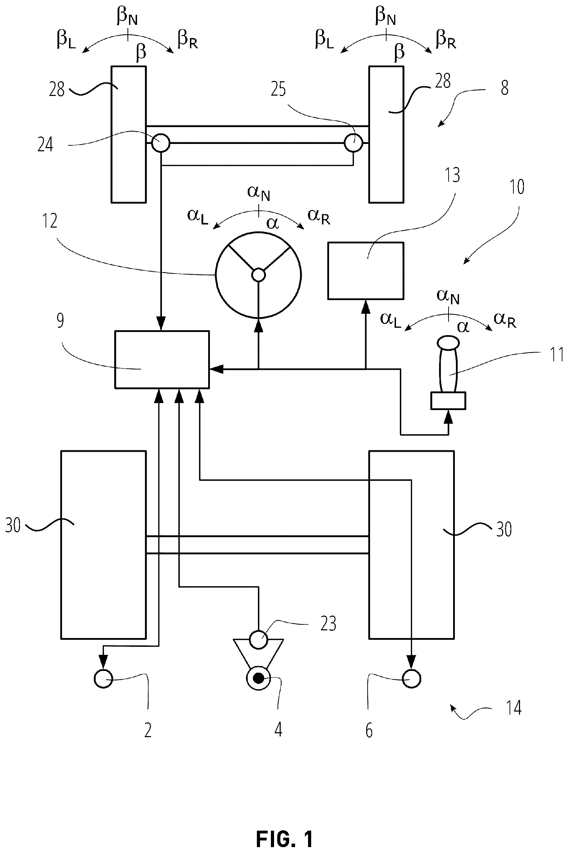

FIG. 1 shows schematically a vehicle 8, for example an agricultural vehicle such as a tractor. The vehicle 8 may be of any other type such as a harvester, a sprayer, a combine, a truck or a passenger car. The vehicle 8 comprises left and right front wheels 28 and left and right rear wheels 30. The rear wheels 30 provide a tractive force to drive the vehicle 8 in a forward or a backward direction. The front wheels 28 are steerable by an operator control 10 of the vehicle 8. The operator control 10 may comprise a steering wheel 12 and/or a steering lever 11 for demanding a steering angle β of the front wheels 28. The operator control 10 is manually moveable out of a neutral position α_{N} to a left direction α_{L} for steering the front wheels 28 to the left direction β_{L} or to a right direction α_{R} for steering the front wheels 28 to the right direction β_{R}. The demanded steering angle β from the operator control 10 is received by a control unit 9 of the vehicle 8. Then, the control unit 9 initiates an adjustment of the steering angle β of the front wheels 28 as demanded. In dependence of the steering angle β, the vehicle 8 will turn in a corresponding direction to drive a curve. The radius of the curve depends on the steering angle β and decreases the more, the more the steering angle β increases (and vice versa).

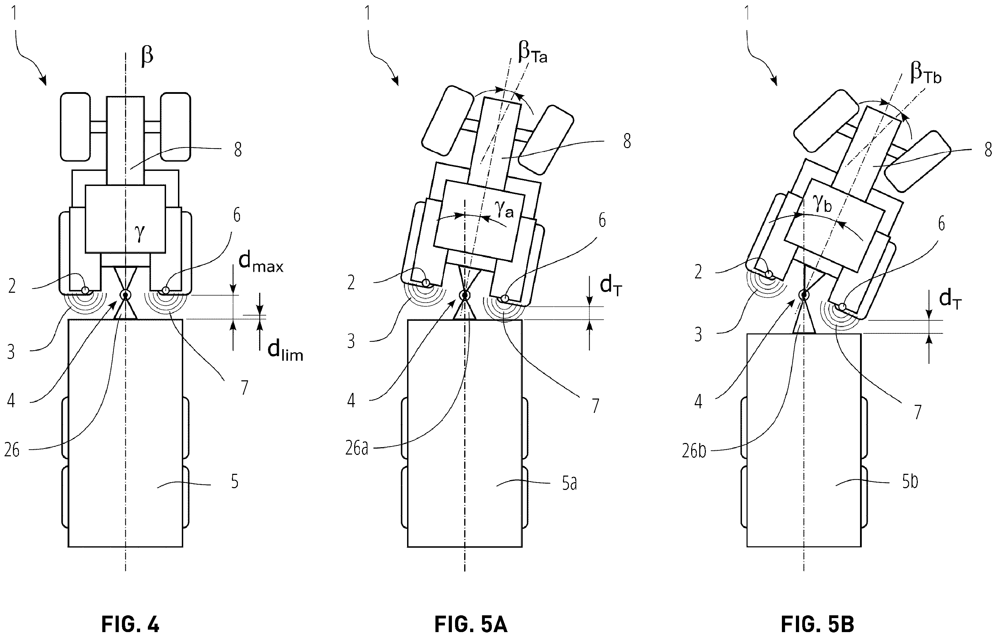

The vehicle 8 comprises a coupling 4 for hitching a towable implement 5 (see FIG. 4). The towable implement 5 may be a trailer or any other agricultural towable implement that may be pulled by the vehicle 8 over an agricultural field such as a plough. A sensor 23 configured to determine a hitching angle γ between the vehicle 8 and the towable implement 5 is attached to the coupling 4 (or alternatively to any other part of the vehicle 8). The hitching angle γ defines an angle between the vehicle 8 and the towable implement 5. When the vehicle 8 and the towable implement 5 are in a straight alignment, the hitching angle γ is zero or neutral (see FIG. 4). The hitching angle γ increases if the vehicle 8 deflects in respect of the towable implement 5 (see FIG. 5A; FIG. 5B), for example when the vehicle 8 drives a curve. I. e., the hitching angle γ is a measure of the deflection between the vehicle 8 and the towable implement 5. The direction into which the vehicle 8 deflects in respect of the towable implement 5 is defined as pivoting direction. As exemplarily illustrated in FIG. 5A, the vehicle 8 has a pivoting direction in the right direction in respect of the towable implement 5a. For example, the sensor 23 may be a camera to determine the hitching angle γ between the drawbar 26 of the towable implement 5 and the coupling 4 of the vehicle 8 as well as the pivoting direction. Alternatively, other types of sensors may be used.

The vehicle 8 also comprises a sensor 24 for determining the steering angle β of the front wheel 28 and a sensor 25 for determining the steering angle β of the right front wheel 28. Sensor 24 may also detect the steering direction of the left front front wheel 28 and sensor 25 may also detect the steering direction of the right front wheel 28. The sensor values determined by the sensors 24 and 25 are transmitted to the control unit 9.

The vehicle 8 also comprises a left sensor 2 configured to determine a distance between the vehicle 8 and the towable implement 5 at a left corner of the vehicle 8 as well as a right sensor 6 configured to determine a distance between the vehicle 8 and the towable implement 5 at a right corner of the vehicle 8. Thus, the sensor 2 can determine a pivoting direction of the vehicle 8 to the left direction and the sensor 6 can determine a pivoting direction of the vehicle 8 to the right direction analogously to the sensor 23 for determining the hitching angle γ. The sensor values determined by the sensors 2 and 6 are transmitted to the control unit 9. Consequently, the control unit 9 can determine for each hitching angle γ a corresponding distance value and convert one value to the other.

The sensors 2 and 6 may be distance sensors such as an ultrasonic sensor or a radar sensor. But alternative types of sensors are also possible. The sensor 2 and 6 may be attached to a part of the vehicle 8 behind the rear wheels 30, for example at a fender of the vehicle 8.

All sensors 2, 6, 23, 24 and 25 may be part of a sensor arrangement 14.

The vehicle 8 also comprises a display 13 connected with the control unit 9. The display 13 is configured to show any parameters, sensor values or settings. The display 13 may be a touch sensitive display so that the operator of the vehicle 8 may input any commands or define any parameters such as a threshold value for any one of the sensor values.

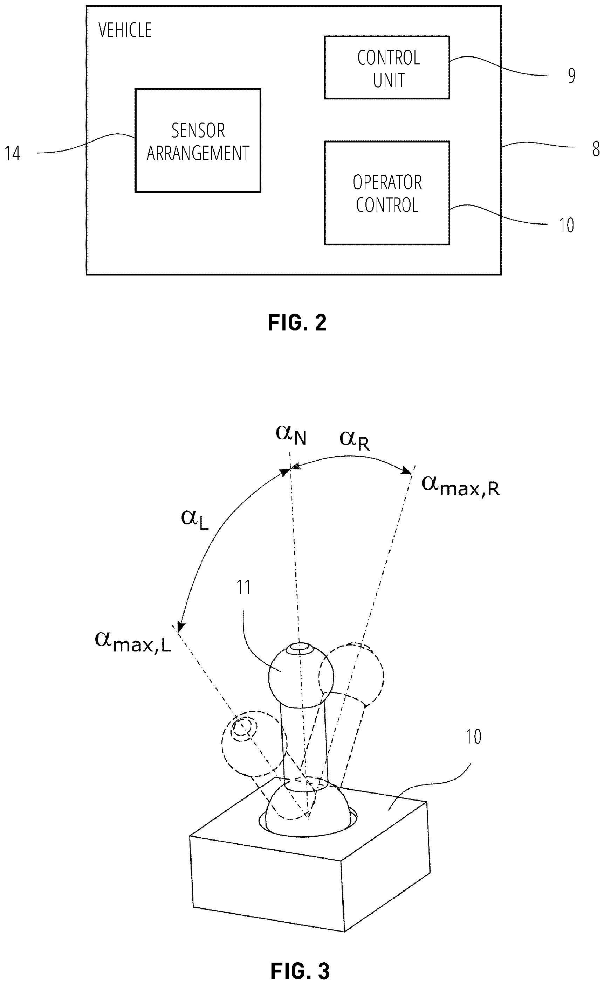

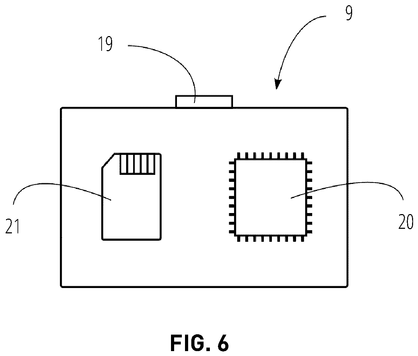

FIG. 2 shows a very simplified block diagram of a vehicle 8. The vehicle 8 comprises the control unit 9 as shown in FIG. 6, the sensor arrangement 14 and the operator control 10. An exemplaric embodiment of an operator control 10 is shown in FIG. 3 in more detail. The control unit 9 is configured to receive signals from the sensor arrangement 14 and from the operator control 10.

The sensor arrangement 14 may also comprise a position determination unit providing position and time signals for determining an absolute position of the vehicle 8 at a specific point of time. The position determination unit may comprise an inertial measurement unit (IMU) and/or a global navigation satellite system (GNSS) receiver. The IMU may provide additional orientation information for improving the accuracy of the global pose estimates. The IMU could provide additional information about the orientation and movement of the vehicle 8 for improving the accuracy of the position estimation and the reference points of the GNSS receiver.

The operator control 10 is configured to provide a force F as a haptic feedback. For example, the force F may be a dynamic force such as a vibration or a static force. The static force may be a resistance against a movement of the operator control 10 in a specific direction. The force F can be controlled by the control unit 9, for example increased or decreased. The higher the force F is increased, the more manual force is needed to operate the operator control 10. The force F can be increased up to a force level that prevents a manual operation of the operator control 10. The force F may be controlled independently for each possible movement direction of the operator control 10. I. e., the force F may be higher when the operator control 10 is operated in one direction and may be lower when the operator control 10 is operated in another direction.

FIG. 3 shows exemplarily a steering lever 11 as one of the possible embodiments of an operator control 10. The steering lever 11 is manually moveable out of a neutral position α_{N} to a left direction α_{L} up to a maximum left deflection α_{max,L} or to a right direction α_{R} up to a maximum right deflection α_{max,R} for demanding a corresponding adjustment of the steering angle β of the vehicle 8. The control unit 9 receives the angle of operation α of the steering lever 11 from the operator control 10 and interprets the deflection α as demand for adjusting the steering angle β of the front wheels 28 accordingly.

In the housing of the operator control 10, a feedback actuator is integrated for providing a haptic feedback to the steering lever 11. The feedback actuator is controlled by the control unit 9. For example, the control unit 9 may control the feedback actuator to vibrate the steering lever 11. Moreover, the control unit 9 may control the feedback actuator to generate a force F against a manual movement of the steering lever 11 in any one of the movement directions, for example against a movement in the right direction α_{R}. The operator of the steering lever 11 feels the force F as a resistance against a movement of the steering lever 11 in the corresponding direction. The more the steering lever 11 is moved towards a maximum deflection α_{max,L}, α_{max,R}, the more the force F may be increased. The force F may be increased to a force level preventing a further manual operation of the steering lever 11 to avoid that the steering lever 11 will be deflected to the maximum deflection. Thus, maximum movement of the steering lever 11 in a movement direction can be limited, for example to 75% of the maximum deflection. Moreover, maximum movement of the steering lever 11 can be limited before the steering angle β increases up to a value causing a collision between the vehicle 8 and the towable implement 5.

FIG. 4 shows the vehicle 8 and the towable implement 5, both forming a vehicle-implement combination 1. The steering angle β is in a neutral position for driving the vehicle 8 in a straight direction. The towable implement 5 is hitched to the coupling 4 of the vehicle 8. The vehicle 8 and the towable implement 5 are in a straight alignment so that the hitching angle γ is zero or neutral. In this configuration, the current distance between the vehicle 8 and the towable implement 5 has a maximum distance dₘₐₓ.

Sensor 2 has a sensing range 3 and the sensor 6 has a sensing range 7 for determining the current distance d_{C} between the vehicle 8 and the towable implement 5. According to the configuration as shown in FIG. 4, the current distance d_{C} corresponds to the maximum distance dₘₐₓ. A distance limit dₗᵢₘ is predefined (e. g. by the operator) and stored in a memory 21 of the control unit 9 (see FIG. 6). The distance limit dₗᵢₘ may correspond to a minimum distance that should not be violated to avoid a collision between the vehicle 8 and the towable implement 5. For an effective collision avoidance for example, maximum movement of the steering lever 11 will be limited when the current distance d_{C} has reached the distance limit dₗᵢₘ and/or when the hitching angle γ increases up to a value that corresponds to the distance limit dₗᵢₘ.

FIG. 5A and FIG. 5B illustrate the impact of the dimensions of the towable implement 5 on the correlation of the hitching angle with the distance between the vehicle 8 and the towable implement 5. As can be seen, the drawbar 26a of the towable implement 5a (FIG. 5A) is shorter than the drawbar 26b of the towable implement 5b (FIG. 5B). Due to these different dimensions of the towable implements 5a, 5b, the vehicle 8 can be deflected in respect of the towable implement 5b more than in respect of the towable implement 5a in adherence of the same distance d_{T} between the vehicle 8 and the towable implement 5 wherein the greater deflection in case of the towable implement 5b results in a greater hitching angle γ_{b} than the hitching angle γₐ in case of the towable implement 5a.

According to the greater hitching angle γ_{b} in case of the towable implement 5b, the vehicle 8 can drive a curve of a smaller radius without colliding with the towable implement in contrast to the towable implement 5a. I. e. in contrast to the towable implement 5a with the shorter drawbar 26a, a smaller minimum radius of a curve excluding a collision between the vehicle 8 and the towable implement 5 can be achieved by the vehicle-implement combination 1 with the towable implement 5b having the longer drawbar 26b. Hence, a steering threshold angle β_{T} corresponding with a minimum radius excluding a collision between the towable implement 5 is greater in case of the vehicle-implement combination 1 with the towable implement 5b having the longer drawbar 26b (see β_{Tb}) than in case of the vehicle-implement combination 1 with the towable implement 5a having the shorter drawbar 26a (see β_{Ta}).

Consequently, in dependence of the dimension of each vehicle-implement combination 1, corresponding threshold values for the hitching angle γ and the steering angle β can be determined in respect of a distance threshold value d_{T}. For example, the vehicle 8 may turn from a straight driving direction to a right direction and drive a curve. The vehicle 8 may continuously increase the steering angle β to drive curves of smaller radius until one of the sensors 2 or 6 detects that the distance threshold d_{T} between the vehicle 8 and the towable implement 5 has been reached. In case of the vehicle-implement combination 1 with the towable implement 5a having the shorter drawbar 26a, the hitching angle γₐ may be determined as threshold value for the hitching angle γ and the steering angle β_{Ta} may be determined as steering threshold angle (see FIG. 5A). In case of the vehicle-implement combination 1 with the towable implement 5b having the longer drawbar 26b, the hitching angle γ_{b} may be determined as threshold value for the hitching angle γ and the steering angle β_{Tb} may be determined as steering threshold angle (see FIG. 5B). As mentioned above, the hitching angle γ can be determined by the sensor 23 and the steering angles β by the sensors 24 and 25 (see also FIG. 1).

FIG. 6 shows the control unit 9 comprising an interface 19, a controller 20 and a memory 21. The control unit 9 may receive and send signals or data via the interface 19. The interface 19 may be a wireless interface or a connector. The controller 20 may store the data or signals received by the control unit 9 in the memory 21. The memory 21 may contain additional data or executable computer program products, for example in terms of a computer-implemented method, that may be retrieved, processed or executed by the controller 20. Data or signals resulting from the processing of data or signals or from the execution of a computer program product may be stored to the memory 21 or sent to the interface 19 by the controller 20.

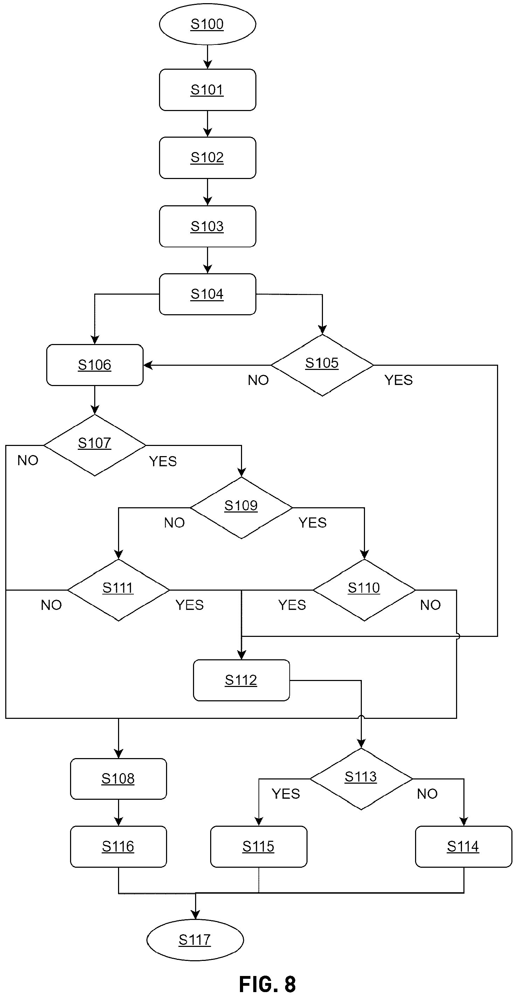

FIG. 8 shows a flow chart of a method for providing a force F as haptic feedback for an operator control 10. The method may be at least partly a computer-implemented method stored as a computer program product in the memory 21 of the control unit 9. The control unit 9 is configured to carry out the method. Computer-implemented parts of the method may be executed by the controller 20 of the control unit 9. The method is described by way of example of several steps without any restriction in respect of that steps. I. e. the number or the order of steps may be adapted, for example single steps may be excluded and/or added and executed earlier or later than described. The method starts with step S100 and proceeds to step S101.

At step S101, the control unit 9 receives one or more sensor signals from the sensor arrangement 14, for example the angle of operation α of the operator control 10, the steering angle β, the hitching angle γ and/or a current distance value d_{C}. As also disclosed above, the control unit 9 can convert the current distance value d_{C} to a corresponding hitching angle γ and vice versa. Hence, the hitching angle γ is also a value indicative of the current distance d_{C} between the vehicle 8 and the towable implement 5.

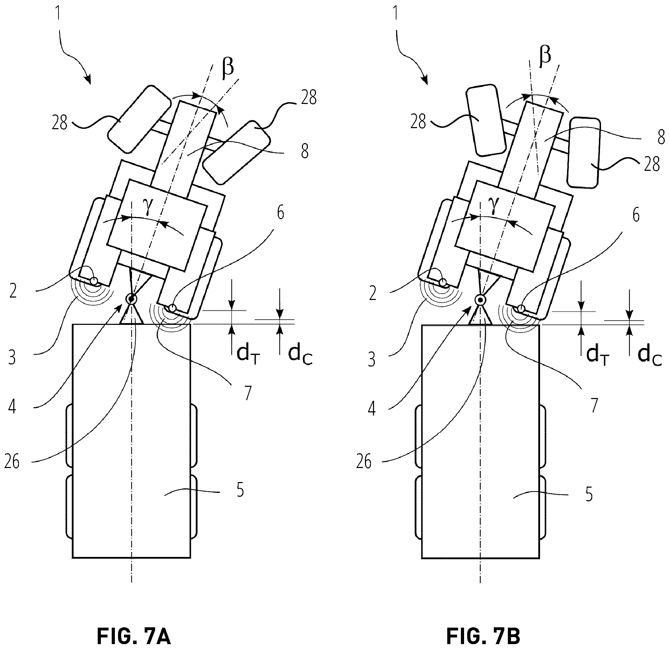

By way of example, an operator may control now the vehicle-implement combination 1 as follows. The vehicle-implement combination 1 may be in a straight configuration as shown in FIG. 4 and the operator may start driving in a straight forward direction. Then, the control unit 9 receives the distance dₘₐₓ as current distance value d_{C}, a neutral position α_{N} from the operator control 10, a neutral hitching value as hitching angle γ and a neutral steering value as steering angle β. When operator begins to operate the operator control 10 out of the neutral position α_{N} to a right direction α_{R} for steering the front wheels 28 of the vehicle 8 to the right direction β_{R}, then the vehicle 8 will drive a curve to the right direction. The pivoting direction of the vehicle 8 in respect of the towable implement 5 will also correspond to the right direction while the hitching angle γ increases as exemplarily illustrated in FIG. 5A. Hence, the control unit 9 receives the distance d_{T} as current distance value d_{C}, the position α from the operator control 10, the hitching value γₐ as hitching angle γ and the steering value β_{Ta} as steering angle β. The operator may continue to move the operator control 10 in the right direction α_{R} for increasing the steering angle β and driving a curve of a smaller radius as exemplarily illustrated in FIG. 7A. Hence, the hitching angle γ is still increasing and the control unit 9 receives the current distance value d_{C}, the hitching angle γ and the steering angle β as shown in FIG. 7A, as well as the position α from the operator control 10. Thereafter, the operator may operate the operator control 10 in the opposite direction, here the left direction α_{L}, to steer the front wheels 28 of the vehicle 8 to the left direction β_{L} accordingly, as illustrated in FIG. 7B. Again, the control unit 9 receives the current distance value d_{C}, the hitching angle γ and the steering angle β as shown in FIG. 7B, as well as the position α from the operator control 10.

As mentioned above, the sensor arrangement 14 comprises sensors for detecting the corresponding values as the sensors 24 and 25 for detecting the steering angle β, the sensors 2 and 6 for detecting the distance between the vehicle 8 and the towable implement 5 and sensor 23 for detecting the hitching angle γ, and for sending corresponding sensor signals to the control unit 9. The control unit 9 can also receive the position α from the operator control 10 and convert the position α to a corresponding steering angle β. Hence, the position α is also a value indicative of the steering angle β.

The method proceeds to step S102 and the control unit 9 determines the pivoting direction of the vehicle 8 in respect of the towable implement 5. The control unit 9 determines also the steering direction of the front wheels 28. The control unit 9 may receive sensor signals representing the pivoting direction and/or the steering direction directly from the sensor arrangement 14 or the control unit 9 may calculate the values based on the received hitching angle γ and steering angle β. In case of a straight configuration of the vehicle-implement combination 1 as illustrated in FIG. 4, the control unit 9 determines a neutral pivoting direction and a neutral steering direction. In case of the configurations shown in FIG. 5A and FIG. 7A, the control units 9 determines that the pivoting direction and the steering direction correspond both with the right direction. In case of the configuration shown in FIG. 7B, the control unit 9 determines that the pivoting direction corresponds still with the right direction but that the steering direction corresponds with the left direction.

The method proceeds to step S103 and the control unit 9 receives a value indicative of the driving direction of the vehicle 8. The driving direction can be forward or rearward and may be determined by the control unit 9 based on the signals received from the position determination unit. Moreover, the driving direction may be determined by the control unit 9 based on signals provided by wheel speed sensors of the vehicle 8.

The method proceeds to step S104 and the control unit 9 determines a distance threshold value d_{T}. The distance threshold value d_{T} can be stored in the memory 21 of the control unit 9 and read out by the controller 20. The operator of the vehicle 8 may define the distance threshold value d_{T} and use the touch sensitive display 13 to enter and save the distance threshold value d_{T} in the memory 21.

The method may proceed to an optional step S105. Alternatively, the method may directly proceed to step S106. At step S105, the control unit 9 may optionally check whether the value indicative of the current distance value d_{C} violates the distance threshold value d_{T}. The value indicative of the current distance value d_{C} may be a distance value or a value derived from any other appropriate value such as the hitching angle. The distance threshold value d_{T} is violated if the value indicative of the current distance d_{C} between the vehicle 8 and the towable implement 5 is smaller than the distance threshold value d_{T} as can be seen in FIG. 7A and FIG. 7B. In case of a violation of the distance threshold value d_{T}, the method proceeds to step S112. Otherwise, the method steps to step S106.

At step S106, the control unit 9 determines a steering threshold angle β_{Ta}, β_{Tb} in relation to the distance threshold value d_{T}. I. e., the control unit 9 determines a steering angle value as steering threshold angle at which the vehicle 8 deflects (or pivots) in respect of the towable implement 5 until the distance between the vehicle 8 and the towable implement 5 corresponds with the distance threshold value d_{T}. As can be seen in a comparison of FIG. 5A and FIG. 5B, the steering threshold angle β_{Ta}, β_{Tb} depends on the dimensions of the towable implement 5 such as the length of the drawbar 26. The distance d_{T} between the vehicle 8 and the towable implement 5 are the same for the towable implement 5a with the shorter drawbar 26a (FIG. 5A) and the towable implement 5b with the longer drawbar 26b (FIG. 5B). But the towable implement 5b with the longer drawbar 26b allows a greater hitching angle γ_{b} when the distance threshold value d_{T} has been reached (see FIG. 5B) wherein the greater hitching angle γ_{b} results in a greater steering threshold angle β_{Tb}.

The control unit 9 may determine the steering threshold angle β_{Ta}, β_{Tb} when the vehicle 8 continuously increases the steering angle β to drive curves of smaller radius until one of the sensors 2 or 6 detects that the distance threshold d_{T} between the vehicle 8 and the towable implement 5 has been reached. At this moment, the control unit 9 receives the value of the current steering angle β from the sensor 24, 25 and stores this value as steering threshold angle β_{Ta}, β_{Tb} in the memory 21. The control unit 9 may automatically repeat step S105 if an exchange of the towable implement 5 has been detected.

The method proceeds to step S107 and the control unit 9 checks whether the value indicative of the steering angle β violates the steering threshold angle β_{Ta}, β_{Tb}. The value indicative of the steering angle β may be a steering angle or a value derived from any other appropriate value such as the position α of the operator control 10. The steering threshold angle β_{Ta}, β_{Tb} is violated if the value indicative of the steering angle β exceeds the steering threshold angle, as for example steering angle β shown in FIG. 7A. In case of a violation of the steering threshold angle β_{Ta}, β_{Tb}, the method steps to step S109. Otherwise, the method proceeds to step S108.

At step S108, the control unit 9 anticipates no potential collision between the vehicle 8 and the towable implement 5. In response to the detected absence of a potential collision, the method proceeds to step S116.

At step S109, the control unit 9 checks whether the pivoting direction and the steering direction have the same direction. As can be seen in FIG. 7A, the vehicle 8 is deflected in respect of the towable implement 5 in the right direction. The front wheels 28 are also turned to the right direction. Hence, the pivoting direction and the steering direction have the same direction. In contrast, FIG. 7B shows the vehicle-implement combination 1 wherein the pivoting direction and the steering direction are different. The pivoting direction corresponds to the right direction since the vehicle 8 is deflected to the right direction in respect of the towable implement 5. But the steering direction corresponds with the left direction since the front wheels 28 are turned to the left direction. If the pivoting direction and the steering direction have the same direction, the method proceeds with step S110. Otherwise, the method proceeds to S111.

At step S110, the control unit 9 checks whether the driving direction of the vehicle 8 is forward. If so, the method proceeds with step S112. If not, the method proceeds with step S108.

At step S111, the control unit 9 checks whether the driving direction of the vehicle 8 is rearward. If so, the method proceeds with step S112. If not, the method proceeds with step S108.

At step S112, the control unit 9 anticipates a potential collision between the vehicle 8 and the towable implement 5. The potential collision has been detected based on a first set of conditions that the steering angle β violates the steering threshold angle β_{Ta}, β_{Tb} (see step S107), the pivoting direction and the steering direction have the same direction (see step S109) and the driving direction is forward (see step S110) or based on a second set of conditions that the steering angle β violates the steering threshold angle β_{Ta}, β_{Tb} (see step S107), the pivoting direction and the steering direction have different directions (see step S109) and the driving direction is rearward (see step S111). When the vehicle 8 of the vehicle-implement combination 1 shown in FIG. 7A is driving forward, the first set of conditions would be fulfilled. The pivoting direction and the steering direction have the same direction. The steering angle β is greater than the steering threshold angle β_{Ta} shown in FIG. 5A so that the hitching angle γ will increase when the vehicle 8 is driving forward. Consequently, the current distance d_{C} will still decrease and the vehicle 8 may collide with the towable implement 5 if the situation does not change. The situation would change, if the vehicle 8 would drive rearward, for example. Then, the hitching angle γ would decrease and the current distance d_{C} would increase. When the vehicle 8 of the vehicle-implement combination 1 shown in FIG. 7B is driving rearward, the second set of conditions would be fulfilled. The pivoting direction and the steering direction have different directions. The steering angle β is greater than the steering threshold angle so that the hitching angle γ will increase when the vehicle 8 is driving rearward. Consequently, the current distance d_{C} will still decrease and the vehicle 8 may collide with the towable implement 5 if the situation does not change. The situation would change, if the vehicle 8 would drive forward, for example. Then, the hitching angle γ would decrease and the current distance d_{C} would increase. In response to the detected potential collision, the method proceeds to step S113.

At step S113, the control unit 9 checks whether the operator control 10 is operated in a direction α_{R}, α_{L} to reduce the steering angle β below the steering threshold angle β_{Ta}, β_{Tb}. If so, the method proceeds to step S115. Otherwise, the method proceeds to step S114. For example, in case of a fulfillment of the first set of conditions as explained for step S112, a potential collision could be avoided if the operator control 10 would be controlled in a left direction to reduce the steering angle β below the steering threshold angle β_{Ta} (see FIG. 7A with vehicle 8 moving forward). Analogously, in case of a fulfillment of the second set of conditions as explained for step S112, a potential collision could be avoided if the operator control 10 would be controlled in a right direction to reduce the steering angle β below the steering threshold angle (see FIG. 7B with vehicle 8 moving rearward). I. e., the operator control 10 may be operated in a direction for increasing the steering angle β over the steering threshold angle and in another direction for decreasing the steering angle β below the steering threshold angle.

At step S114, the control unit 9 controls the feedback actuator of the operator control 10 to increase the force F as haptic feedback in response to a manual operation of the operator control 10 in a direction controversially to reduce the steering angle β below the steering threshold angle β_{Ta}. So, the operator feels the haptic feedback as a resistance against an operation of the operator control 10. The force F may increase the more the operator control 10 is operated in a direction α that may cause a violation of the steering threshold angle β_{Ta}, β_{Tb}. Optionally, the force F may be increased to a force level that prevents a manual operation of the operator control 10 to avoid a steering angle β that may cause a collision between the vehicle 8 and the towable implement 5. For instance, a movement of the operator control 10 to increase the steering angle may be blocked when the current distance d_{C} has reached the distance limit dₗᵢₘ (see FIG. 4).

At step S115, the control unit 9 controls the feedback actuator of the operator control 10 to reduce the force F as haptic feedback in response to a manual operation of the operator control 10 in a direction to reduce the steering angle β below the steering threshold angle β_{Ta}. The force F may be fully reduced or removed so that the operator may not feel any haptic feedback provided by the operator control 10.

At step S116, the control unit 9 controls the feedback actuator of the operator control 10 to decrease any force F providing a haptic feedback. The force F may be completely removed so that no haptic feedback may induced by the feedback actuator. I. e., the operator can operate the operator control 10 without recognizing any resistance against an operation of the operator control 10.

Hence, the control unit 9 is configured to determine whether an operation of the operator control 10 in the one or the other direction may increase the probability of a collision between the vehicle 8 and the towable implement 5 and to increase the force F as haptic feedback against an operation in the direction that increases the probability of a collision whereas operations of the operator control 10 without increasing the probability of a collision may be free of any force feedback.

After steps S114, S115 and S116, the method proceeds to step S117 and ends. The method may be repeated again and start with step S100.

All references cited herein are incorporated herein in their entireties. If there is a conflict between definitions herein and in an incorporated reference, the definition herein shall control.

### LISTING OF DRAWING ELEMENTS

| | | | |
|---|---|---|---|
| 1 | vehicle-implement combination | 19 | interface |
| 2 | sensor | 20 | controller |
| 3 | sensing range | 21 | memory |
| 4 | coupling | 23 | sensor |
| 5 | towable implement | 24 | sensor |
| 5a | towable implement | 25 | sensor |
| 5b | towable implement | 26 | drawbar |
| 6 | sensor | 26a | drawbar |
| 7 | sensing range | 26b | drawbar |
| 8 | vehicle | 28 | front wheel |
| 9 | control unit | 30 | rear wheel |
| 10 | operator control | | |
| 11 | steering lever | | |
| 12 | steering wheel | | |
| 13 | display | | |
| 14 | sensor arrangement | | |

## Claims

1. A vehicle (8), comprising:
an operator control (10) configured to provide a force (F) as haptic feedback;
a coupling (4) configured for hitching a towable implement (5);
a sensor arrangement (14) configured to determine at least one sensor value; and
a control unit (9) configured to
anticipate a potential collision between the vehicle (8) and the towable implement (5) based on the at least one sensor value; and
increase the force (F) if a potential collision is anticipated.

2. The vehicle (8) of claim 1, wherein
control unit (9) configured to decrease the force (F) if no potential collision is anticipated.

3. The vehicle (8) of claim 1 or 2, wherein
the at least one sensor value comprises a value indicative of a distance (d_{C}) between the vehicle (8) and a hitched towable implement (5).

4. The vehicle (8) of claim 3, wherein the control unit (9) is configured to determine a distance threshold value (d_{T}); and
anticipate a potential collision if the value indicative of the distance (d_{C}) violates the distance threshold value (d_{T}).

5. The vehicle (8) of claim 3 or 4, wherein
the value indicative of the distance (d_{C}) between the vehicle (8) and a hitched towable implement (5) is a hitching angle (γ) between the vehicle (8) and the hitched towable implement (5).

6. The vehicle (8) of any one of claims 1 to 5, wherein
the at least one sensor value comprises a value indicative of a steering angle (β).

7. The vehicle (8) of claim 6, wherein the control unit (9) is configured to
determine a pivoting direction of the vehicle (8) in respect of the towable implement (5); determine a steering direction of the steering angle (β).

8. The vehicle (8) of any one of claims 1 to 7, wherein
the at least one sensor value comprises a value indicative of a driving direction of the vehicle (8).

9. The vehicle (8) of claim 8, when referring to claim 7, wherein the control unit (9) is configured to
determine a distance threshold value (d_{T});
determine a steering threshold angle (β_{Ta}, β_{Tb}) in relation to the distance threshold value (d_{T});
determine whether the value indicative of the steering angle (β) violates the steering threshold angle (β_{Ta}, β_{Tb}); and
anticipate a potential collision if
the steering angle (β) violates the steering threshold angle (β_{Ta}, β_{Tb});
the pivoting direction and the steering direction have the same direction; and driving direction is forward.

10. The vehicle (8) of claim 9, wherein the control unit (9) is configured to anticipate no potential collision if
the pivoting direction and the steering direction have different directions; and
the driving direction is forward.

11. The vehicle (8) of claim 9 or 10, wherein the control unit (9) is configured to anticipate no potential collision if
the pivoting direction and the steering direction have the same direction; and
driving direction is rearward.

12. The vehicle (8) of any one of claims 9 to 11, wherein the control unit (9) is configured to anticipate a potential collision if
the steering angle (β) violates the steering threshold angle (β_{Ta}, β_{Tb});
the pivoting direction and the steering direction have different directions; and
the driving direction is rearward.

13. The vehicle (8) of any one of claims 9 to 12, wherein the control unit (9) is configured to
increase the force (F) if a potential collision is anticipated and if the operator control (10) is operated in a direction controversially to reduce the steering angle (β) below the steering threshold angle (β_{Ta}, β_{Tb}).

14. The vehicle (8) of any one of claims 9 to 13, wherein the control unit (9) is configured to
decrease the force (F) if a potential collision is anticipated and if the operator control (10) is operated in a direction to reduce the steering angle (β) below the steering threshold angle (β_{Ta}, β_{Tb}).

15. A method of providing a force (F) as haptic feedback for an operator control (10) of a vehicle (8) connectable with a towable implement (5), comprising
determining at least one sensor value; and
anticipating a potential collision between the vehicle (8) and the towable implement (5) based on the at least one sensor value; and
increasing the force (F) if a potential collision is anticipated.
